# EUROPEAN PATENT APPLICATION

(11) **EP 3 848 326 A1**
(43) Date of publication of application: **14.07.2021**
(21) Application number: 19858281.9
(22) Date of filing: 06.09.2019
(51) Int. Cl.: B66F 9/19, B25J 5/00, B25J 9/06, B65G 1/00, B65G 1/137, B65G 67/02

(54) **TRAVELING ROBOT**

(30) Priority: 07.09.2018 JP 2018168326
(71) Applicant: Kawasaki Jukogyo Kabushiki Kaisha, Hyogo 650-8670 (JP)
(72) Inventor: BANDO, Kenji, Kobe-shi, Hyogo 650-8670 (JP); YOSHIKUWA, Eiji, Kobe-shi, Hyogo 650-8670 (JP); WATANABE, Masayuki, Kobe-shi, Hyogo 650-8670 (JP); TSUJIMORI, Toshiyuki, Kobe-shi, Hyogo 650-8670 (JP); YAMANE Hideshi, Kobe-shi, Hyogo 650-8670 (JP); MIYAO, Shoichi, Kobe-shi, Hyogo 650-8670 (JP); XU, Tianfen, Kobe-shi, Hyogo 650-8670 (JP); TANIGUCHI, Shunichi, Kobe-shi, Hyogo 650-8670 (JP); OKAZAKI, Yoshihiro, Osaka-shi, Osaka 530-8566 (JP); KITAGUCHI, Ryoichi, Osaka-shi, Osaka 530-8566 (JP); OTSUJI, Yuichi, Osaka-shi, Osaka 530-8566 (JP); HOSHI, Masayoshi, Osaka-shi, Osaka 530-8566 (JP); MATSUI, Shigetomo, Osaka-shi, Osaka 530-0042 (JP); MATSUSHIMA, Kanji, Osaka-shi, Osaka 530-0042 (JP); WAKAYAMA, Hiromu, Osaka-shi, Osaka 530-0042 (JP)
(74) Representative: Arnold & Siedsma
(86) International application number: PCT/JP2019/035211
(87) International publication number: WO 2020/050407

(57) **Abstract**

A traveling robot includes: a traveling body including a truck and a drive unit, the truck including front and rear wheels and a floor frame, the drive unit being configured to rotate the wheels; a support mechanism configured to raise or lower a holding tool configured to support a mounting plate; and a picking robot configured to load a cargo onto the mounting plate or unload the cargo from the mounting plate. The drive unit is mounted on the floor frame, and the floor frame includes a projecting portion projecting forward from a portion on which the drive unit is mounted. The support mechanism is attached to a front end portion of the projecting portion. The picking robot is provided at the projecting portion, is arranged between the support mechanism and the drive unit in a front-rear direction, and is arranged on or behind an imaginary vertical line passing through a front axle.

## Description

### Technical Field

The present invention relates to a traveling robot capable of traveling by itself, and particularly to a traveling robot equipped with an apparatus configured to perform work of loading or unloading cargos.

### Background Art

As disclosed in PTL 1, a vehicle including a traveling body and an arm configured to perform cargo handling work is known. This vehicle can perform loading of cargos from a container to a pallet and loading and unloading of cargos between pallets.

### Citation List

### Patent Literature

PTL 1: Japanese Laid-Open Patent Application Publication No. 2015-202910

### Summary of Invention

### Technical Problem

In this vehicle, a pair of left and right masts are provided in front of a front axle, and a cargo handling arm is attached to a vertically intermediate portion of a side surface of the left mast. The cargo handling arm is arranged in a so-called front overhang region. Therefore, in order to secure weight balance or secure a grounding load of a rear wheel that is a steered wheel, the weight of a counterweight increases. Since the cargo handling arm is attached at a relatively upper position, the position of the center of gravity of the entire vehicle becomes high, and therefore, the vehicle easily rolls over.

An object of the present invention is to provide a traveling robot equipped with an apparatus configured to load or unload cargos, the traveling robot being capable of realizing weight reduction or lowering of the center of gravity.

### Solution to Problem

A traveling robot according to one aspect of the present invention includes: a traveling body including a truck and a drive unit, the truck including front and rear wheels and a floor frame, the drive unit being configured to drive the wheels; a support mechanism configured to raise or lower a holding tool configured to support a mounting plate; and a picking robot configured to load a cargo onto the mounting plate or unload the cargo from the mounting plate. The drive unit is mounted on a rear portion of the floor frame, and the floor frame includes a projecting portion projecting forward from a portion on which the drive unit is mounted. The support mechanism is attached to a front end portion of the projecting portion. The picking robot is provided at the projecting portion, is arranged between the support mechanism and the drive unit in a front-rear direction, and is arranged on or behind an imaginary vertical line passing through a front axle.

According to the above configuration, the projecting portion is provided at the floor frame. The picking robot is provided at the projecting portion and is arranged on or behind the imaginary vertical line passing through the front axle. Therefore, the increase in the weight of the counterweight can be avoided as compared to when the picking robot is arranged in an overhang region. Moreover, the position of the center of gravity of the entire vehicle can be made lower than when the picking robot is attached to a side portion of the support mechanism.

### Advantageous Effects of Invention

The present invention can provide a traveling robot equipped with a picking robot serving as an apparatus configured to load or unload cargos, the traveling robot being capable of realizing weight reduction or lowering of the center of gravity.

### Brief Description of Drawings

FIG. 1 is a perspective view showing a traveling robot according to an embodiment.
FIGS. 2A and 2B are perspective views showing the traveling robot according to the embodiment.
FIG. 3A is a plan view showing the traveling robot according to the embodiment.
FIG. 3B is a side view showing the traveling robot according to the embodiment.
FIG. 4 is a perspective view showing a picking robot detached from the mobile robot according to the embodiment.
FIG. 5 is a perspective view showing the mobile robot according to a modified example.

### Description of Embodiments

Hereinafter, an embodiment will be described with reference to the drawings. In the drawings, the same reference signs are used for the same or corresponding components, and the repetition of the same detailed explanation is avoided.

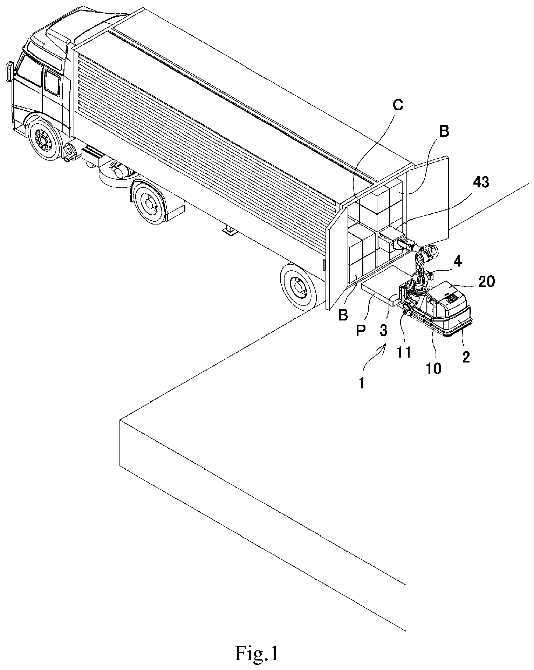

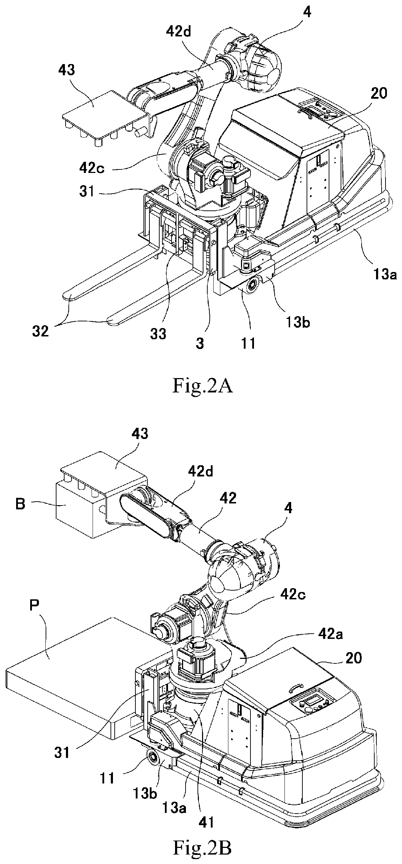

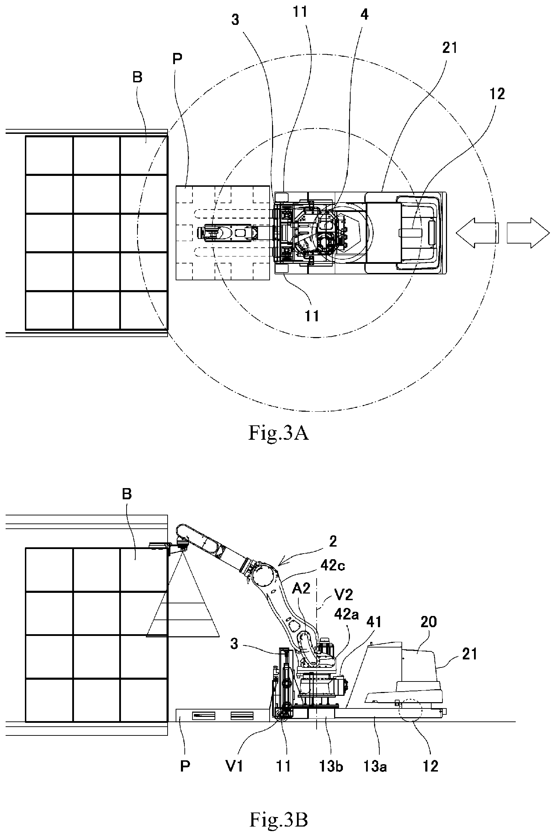

As shown in FIGS. 1, 2A, 2B, 3A, and 3B, a traveling robot 1 according to the present embodiment can travel by itself. The traveling robot 1 can perform work of loading cargos B onto a mounting plate or work of unloading the cargos B from the mounting plate. As shown in FIG. 1, the traveling robot 1 is used to unload the cargos B from a container C.

The traveling robot 1 includes a traveling body 2, a support mechanism 3, and a picking robot 4.

The traveling body 2 includes a truck 10 and a drive unit 20. The truck 10 includes front and rear wheels 11 and 12 and a floor frame 13. The drive unit 20 drives the wheels. In the present embodiment, the number of front wheels is two, and the number of rear wheels is one. However, the number of wheels is not limited. The rear wheel 12 serves as both a driving wheel and a steered wheel. However, the front wheels 11 or the front and rear wheels 11 and 12 may be the driving wheels, and/or the front wheels 11 may be the steered wheels.

Moreover, the traveling body 2 according to the present embodiment can automatically travel without a driving operation performed by a human. To be specific, the traveling body 2 is a so-called automated guided vehicle (AGV). A guiding system of the traveling body 2 serving as the automated guided vehicle is not especially limited.

The floor frame 13 includes: an installation portion 13a at which the drive unit 20 is provided; and a projecting portion 13b projecting forward relative to the installation portion 13a or the drive unit 20. The front wheels 11 are attached to the projecting portion 13b so as to be located away from each other in a left-right direction. The rear wheel 12 is provided so as to partially project downward from the installation portion 13a and is positioned at a center portion in a vehicle width direction.

The drive unit 20 is constituted by a casing 21 and various devices accommodated in the casing 21. Such devices include: a drive actuator configured to rotate the wheels; a steering actuator configured to steer the wheels; a mechanism configured to transmit power, generated by the actuators, to the wheels; an actuator controller configured to control the actuators; and a power supply device for the actuators and the controller. The automatic traveling of the traveling body 2 is realized by the actuator controller. In the present embodiment, a robot controller configured to control the operation of the picking robot 4 is also accommodated in the casing, and the power supply for the actuators and the controller also serves as a power supply for the picking robot. Therefore, wire members through which power is supplied to the picking robot 4 do not have to be connected to the traveling body 2, and therefore, it is possible to prevent a case where such wire members disturb the traveling of the traveling body 2 serving as the automated guided vehicle. Moreover, a counterweight is attached to a rear portion of the casing 21.

The casing 21 has a substantially quadrangular box shape. In the present embodiment, a front surface of the casing 21 is inclined rearward as it extends upward. In a side view, the casing 21 is formed in a substantially trapezoidal shape. The projecting portion 13b projects forward beyond the front surface of the casing 21.

The support mechanism 3 can raise or lower a holding tool 32 capable of supporting the mounting plate. The support mechanism 3 is attached to a front end portion of the projecting portion 13b. The support mechanism 3 includes a base frame portion 31 erected at the front end portion of the projecting portion 13b. The holding tool 32 projects forward from the base frame portion 31. The support mechanism 3 includes a raising/lowering mechanism 33 arranged in the base frame portion 31 and configured to raise or lower the holding tool 32. For example, the mounting plate corresponds to a pallet P, and the holding tool 32 corresponds to a pair of left and right forks.

By moving the traveling body 2 forward with the holding tool 32 positioned at a lower limit position, the forks are inserted into the pallet P, and the holding tool 32 supports the mounting plate. By moving the forks upward, the pallet P can be raised. By moving the traveling body 2 rearward with the forks positioned at the lower limit position, the pallet P can be left on a ground surface, and the forks can be pulled out from the pallet P. Thus, a state where the holding tool 32 supports the mounting plate is terminated.

The picking robot 4 is provided on an upper surface of the projecting portion 13b. The picking robot 4 is arranged between the support mechanism 3 and the drive unit 20 in a front-rear direction. The picking robot 4 is an articulated robot, and the position of a tip end of the picking robot 4 moves largely in upper, lower, front, rear, left, and right directions. In consideration of this, a base of the picking robot 4 is arranged behind the base frame portion of the support mechanism 3 and in front of the front surface of the casing 21 of the drive unit 20.

The front wheels 11 are arranged at the projecting portion 13b. An imaginary vertical line V1 passing through a front axle is set. The picking robot 4 is arranged on or behind the imaginary vertical line V1. Since the truck 10 is configured such that the projecting portion 13b is formed, the above arrangement relation between the picking robot 4 and the front wheels 11 is realized.

An installation surface on which the picking robot 4 is provided is positioned lower than the position of an upper end of the drive unit 20. The picking robot 4 includes a base 41 and a vertical articulated robot arm 42. The base 41 is provided at the projecting portion 13b. The robot arm 42 is coupled to the base 41 so as to be operatable. The robot arm 42 includes a first arm 42a and a second arm 42c. The first arm 42a is coupled to the base 41 so as to be rotatable about a vertical axis V2 and extends upward from the base 41. The second arm 42c is coupled to an upper end portion of the first arm 42a so as to be rotatable about a horizontal swing shaft A2. A lower end portion of the second arm 42c is coupled to the upper end portion of the first arm 42a. The vertical axis V2 is arranged behind the imaginary vertical line V1. The swing shaft A2 is positioned above the position of the upper end of the drive unit 20 or the position of an upper end of the support mechanism 3.

The robot arm 42 further includes a wrist portion 42d coupled to an upper end portion of the second arm 42c. A holding tool 43 configured to hold the cargo B is attached to a tip end portion of the wrist portion 42d.

In the traveling robot 1 configured as above, the projecting portion 13b is formed at the floor frame 13, and the picking robot 4 is provided at the projecting portion 13b. The picking robot 4 is arranged on or behind the imaginary vertical line V1 passing through the front axle. Therefore, the increase in the weight of the counterweight can be avoided as compared to when the picking robot 4 is arranged in an overhang region. Moreover, the position of the center of gravity of the entire vehicle can be made lower than when the picking robot 4 is attached to a side portion of the support mechanism 3.

Moreover, the picking robot 4 is arranged on a vehicle width center line of the traveling body 2. Therefore, the center of gravity of the entire vehicle can be easily arranged at a middle portion of the vehicle in the vehicle width direction, and thus, the operation of the traveling robot 1 stabilizes. Especially in the present embodiment, since the number of rear wheels is one, the above configuration is especially effective in such wheel arrangement.

Especially, the installation surface on which the base 41 is provided is positioned lower than the position of the upper end of the drive unit 20. Since the picking robot 4 is arranged at a low position as above, the lowering of the center of gravity of the vehicle is more easily realized. In addition, the picking robot 4 is a vertical articulated robot, and the first arm 42a coupled to the base 41 extends upward. With this, while realizing the lowering of the center of gravity, an arm located at a tip end side of the first arm 42a can be prevented from interfering with the drive unit 20 and the support mechanism 3. Especially, the swing shaft A2 coupling the first arm 42a and the second arm 42c is positioned above the position of the upper end of the drive unit 20 or the position of the upper end of the support mechanism 3. Therefore, a movable range of the holding tool 43 can be made large in the upper, lower, front, and rear directions. A height from a wheel grounding surface to a tip end of the second arm 42c when the second arm 42c is in such a posture as to extend upward from the first arm 42a is 2,200 to 2,500 mm. With this, loading work and unloading work in a 20-foot container are realized.

In the present embodiment, the drive unit 20 is arranged at a rear portion of the traveling body 2, and the rear wheel serves as both the driving wheel and the steered wheel. The structure around the front wheels can be made simpler than when the front wheels serve as the driving wheels and/or the steered wheels. Therefore, the installation surface on which the picking robot 4 is provided can be easily made low.

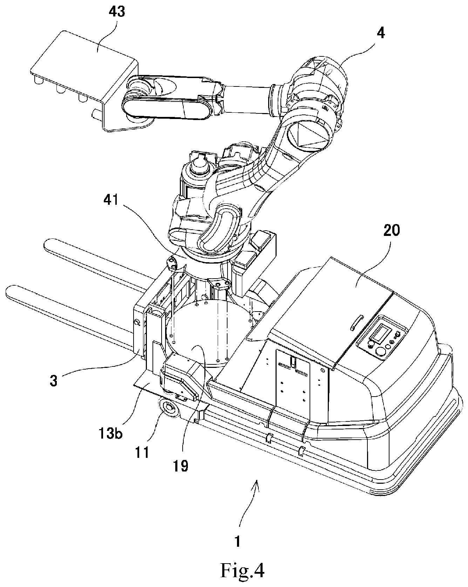

It should be noted that the present embodiment is not limited to a case where the base 41 of the picking robot 4 is directly provided at the projecting portion 13b. As shown in FIG. 4, as a part independent from the truck 10, a pedestal member 19 at which the base 41 of the picking robot 4 is installed may be attached to the projecting portion 13b. The pedestal member 19 is detachably interposed between the picking robot 4 and the projecting portion 13b. In this case, the pedestal member 19 is a replaceable part. Therefore, the picking robots 4 of various sizes can be mounted on the traveling robot 1 through the pedestal members 19 corresponding to the picking robots 4.

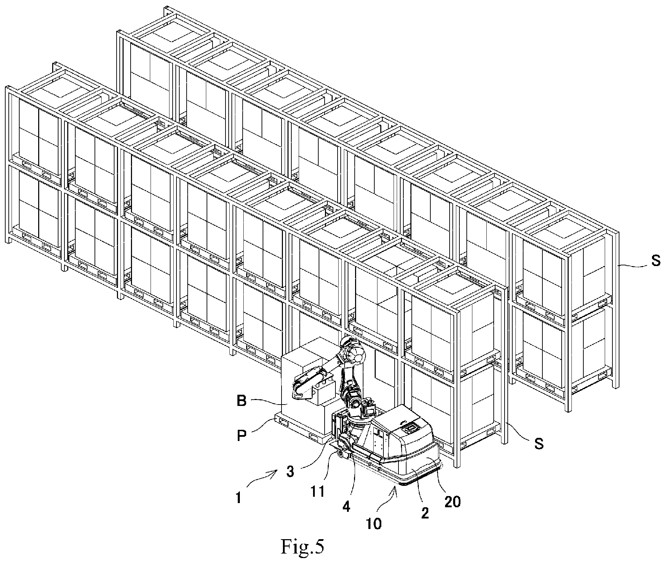

The foregoing has described the embodiment. The above configuration is one example, and additions, modifications, and/or eliminations may be made suitably. Moreover, in addition to the unloading from the container as shown in FIG. 1, the traveling robot 1 can be used for picking work of the cargos B stacked in a warehouse shelf S as shown in FIG. 5 or transferring work of the cargos B between the pallets.

### Reference Signs List

- 1: traveling robot
- 2: traveling body
- 3: support mechanism
- 4: picking robot
- 10: truck
- 11, 12: wheel
- 13: floor frame
- 13b: projecting portion
- 19: pedestal member

## Claims

1. A traveling robot comprising:
a traveling body including a truck and a drive unit, the truck including front and rear wheels and a floor frame, the drive unit being configured to rotate the wheels;
a support mechanism configured to raise or lower a holding tool configured to support a mounting plate; and
a picking robot configured to load a cargo onto the mounting plate or unload the cargo from the mounting plate, wherein:
the drive unit is mounted on the floor frame, and the floor frame includes a projecting portion projecting forward from a portion on which the drive unit is mounted;
the support mechanism is attached to a front end portion of the projecting portion; and
the picking robot is provided at the projecting portion, is arranged between the support mechanism and the drive unit in a front-rear direction, and is arranged on or behind an imaginary vertical line passing through a front axle.

2. The traveling robot according to claim 1, wherein the drive unit steers the rear wheel.

3. The traveling robot according to claim 1 or 2, wherein the picking robot is arranged on a vehicle width center line of the traveling body.

4. The traveling robot according to any one of claims 1 to 3, wherein an installation surface on which the picking robot is provided is positioned lower than a position of an upper end of the drive unit.

5. The traveling robot according to any one of claims 1 to 4, wherein:
the picking robot includes
a base provided at the projecting portion and
a vertical articulated robot arm coupled to the base so as to be operatable; and
the robot arm includes a first arm coupled to the base so as to be rotatable about a vertical axis, the first arm extending upward from the base.

6. The traveling robot according to claim 5, wherein:
the robot arm includes a second arm coupled to an upper end portion of the first arm so as to be rotatable about a horizontal swing shaft; and
the swing shaft is positioned above a position of an upper end of the drive unit or a position of an upper end of the fork device.

7. The traveling robot according to claim 6, wherein a height from a wheel grounding surface to a tip end of the second arm when the second arm is in such a posture as to extend upward from the first arm is 2,200 to 2,500 mm.

8. The traveling robot according to any one of claims 1 to 7, further comprising a pedestal member detachably interposed between the picking robot and the projecting portion.
